# EUROPÄISCHE PATENTSCHRIFT

(11) **EP 3 456 480 B1**
(45) Veröffentlichungstag und Bekanntmachung des Hinweises auf die Patenterteilung: **03.11.2021**
(21) Anmeldenummer: 17001545.7
(22) Anmeldetag: 15.09.2017
(51) Int. Cl.: B25F 5/00, A47L 5/24, F01P 5/04, F16B 39/22, A01G 20/47, F04D 29/26

(54) **HANDGEFÜHRTES ARBEITSGERÄT**
MANUALLY OPERATED WORK DEVICE
APPAREIL DE TRAVAIL PORTATIF

(43) Veröffentlichungstag der Anmeldung: 20.03.2019
(73) Patentinhaber: Andreas Stihl AG & Co. KG, 71336 Waiblingen (DE)
(72) Erfinder: Densborn, Gerd, 71334 Waiblingen (DE); Schliemann, Harald, 71334 Waiblingen (DE); Cornelsen, Ralf, 71546 Aspach (DE); Weissert, Wolfgang, 71364 Winnenden (DE)
(74) Vertreter: Reinhardt, Annette

(56) Entgegenhaltungen:
- EP-A2- 2 589 704
- WO-A1-2012/069770
- DE-A1- 3 347 289
- US-A1- 2008 022 552

## Beschreibung

Die Erfindung betrifft ein handgeführtes Arbeitsgerät der im Oberbegriff des Anspruchs 1 angegebenen Gattung.

Es sind von Hand zu führende Blasgeräte bekannt, welche ein Gehäuse mit einem darin aufgenommenem Verbrennungsmotor sowie ein am Gehäuse angeordnetes Gebläserad umfassen. Das Gebläserad ist auf einer vom Antriebsmotor angetriebenen Welle angeordnet und mittels einer Mutter gegen eine Wellenschulter geklemmt befestigt auf der Welle gehalten. Nachteilig bei derartigen Blasgeräten ist, dass eine Demontage des Gebläserads nur erschwert möglich ist.

Aus der EP 2 589 704 A2 ist ein handgeführtes Blasgerät mit einem Motor bekannt. Das Blasgerät umfasst eine von dem Motor angetriebene Welle, wobei ein Gebläserad auf der Welle gehalten ist.

Aus der US 2008/0022552 A1 ist ein Wäschetrockner bekannt, der ein über eine Mutter auf einer Welle befestigtes Gebläserad umfasst.

Der vorliegenden Erfindung liegt die Aufgabe zugrunde, ein handgeführtes Arbeitsgerät der im Oberbegriff des Anspruchs 1 angegebenen Gattung zu schaffen, dessen Gebläseradbefestigung eine einfache Demontage des Gebläserads ermöglicht.

Diese Aufgabe wird durch ein handgeführtes Arbeitsgerät mit den Merkmalen des Anspruchs 1 gelöst.

Es ist vorgesehen, dass das Gebläserad im Betrieb des Arbeitsgerätes mittels einer Mutter auf der Welle reibkraftschlüssig durch ein wirkendes finales Anzugsmoment der Mutter gegen Verdrehung gehalten ist. Zwischen der Mutter und der Welle ist über einen Gewindeabschnitt ein um die Drehachse wirkendes Gewindereibmoment übertragbar. Zwischen der Mutter und dem Gebläserad ist über eine erste Reibkontaktfläche ein um die Drehachse wirkendes erstes Reibmoment übertragbar. Die erste Reibkontaktfläche ist so ausgebildet, dass bei einem Mindest-Anzugsmoment der Mutter das übertragbare erste Reibmoment größer als das wirkende Gewindereibmoment ist, wobei das Mindest-Anzugsmoment zwischen 10% und 100% des Betriebsdrehmomentes liegt. Dadurch bewegt im Betrieb des Arbeitsgerätes bei einer Relativbewegung zwischen dem Gebläserad und der Welle das Gebläserad die Mutter über das an der Reibkontaktfläche wirkende erste Reibmoment mit. Dadurch spannt die Mutter das Gebläserad gegen die Welle über die zweite Reibkontaktfläche nach. Die zweite Reibkontaktfläche verläuft konisch zur Drehachse.

Das Nachspannen der Mutter im Betrieb des Arbeitsgerätes ohne Zutun des Bedieners ermöglicht dem Bediener, die Mutter mit einem nur geringen Anzugsmoment über das Gebläserad gegen die Welle zu verspannen. Die Mutter spannt das Gebläserad bedarfsgerecht bezogen auf die im Betrieb des Arbeitsgerätes auftretenden Belastungen nach. Ein vom Bediener bei der Montage des Gebläserads gewähltes zu hohes Anzugsmoment wird dadurch weitgehend vermieden. Zusätzlich kann der Bediener bei der Montage des Gebläserads von sonst üblichen Sicherheitsfaktoren absehen, welche ein Lösen des Gebläserads vermeiden sollten.

Das vom Bediener bei der Montage des Gebläserads aufzubringende Mindest-Anzugsmoment ist so groß zu wählen, dass zwischen der Mutter und dem Gebläserad ein Reibkontakt entsteht und in diesem Reibkontakt, der ersten Reibkontaktfläche, das erste Reibmoment übertragen werden kann. Dabei wird bereits bei einem Mindest-Anzugsmoment von mindestens 10%, vorteilhaft von mindestens 20%, insbesondere von mindestens 30% des Betriebsdrehmomentes ein automatisches Nachspannen des Gebläserads erreicht. Das Betriebsdrehmoment ist das im Betrieb des Arbeitsgerätes zwischen der Welle und dem Gebläserad übertragbare Moment. Das automatische Nachziehen des Gebläserads ist dann gegeben, wenn das vom Bediener aufgebrachte Mindest-Anzugsmoment vorteilhaft zwischen 10% bis 90%, insbesondere zwischen 30% bis 80% des Betriebsdrehmomentes liegt. Das Betriebsdrehmoment beträgt vorteilhaft mindestens 80 Nm, insbesondere mindestens 100 Nm. Durch das Nachspannen des Gebläserads durch die Mutter an die Welle wird das Anzugsmoment bedarfsgerecht so groß gewählt, wie es im Betrieb des Arbeitsgeräts zur Befestigung des Gebläserads notwendig ist. Ein zu hohes Anzugsmoment wird dadurch vermieden.

In der zweiten, konisch verlaufenden Reibkontaktfläche wirkt eine Konusreibkraft in einem Abstand zur Drehachse in Umfangsrichtung der Drehachse. Die Konusreibkraft ist eine Reibkontaktkraft. Die Konusreibkraft in der zweiten Reibkontaktfläche erzeugt aufgrund ihres Abstands zur Drehachse das um die Drehachse wirkende zweite Reibmoment. Durch die Konizität der zweiten Reibkontaktfläche ergibt sich ein Keileffekt. Dieser Keileffekt bewirkt gegenüber einer zur Drehachse senkrecht verlaufenden Reibkontaktfläche eine Erhöhung der Reibkontaktkräfte in der zweiten Reibkontaktfläche zwischen Welle und Gebläserad, so dass sich in der zweiten konisch verlaufenden Reibkontaktfläche hohe Reibmomente übertragen lassen. Dadurch ist bereits bei einem niedrigeren Anzugsmoment das zweite Reibmoment in der zweiten Reibkontaktfläche ausreichend groß, um das Gebläserad auf der Welle reibkraftschlüssig ohne Schlupf zu halten. Die Konizität der zweiten Reibkontaktfläche ermöglicht aufgrund der Übertragbarkeit des hohen zweiten Reibmomentes auch eine Reduzierung des Durchmessers der Welle am Konus. Dadurch kann die Welle klein dimensioniert und Bauraum eingespart werden.

Die Konizität der zweiten Reibkontaktfläche bewirkt gegenüber einer radial zur Drehachse verlaufenden Kontaktfläche zwischen Gebläserad und Welle eine Vergrößerung der Kontaktfläche. Dadurch reduziert sich die Flächenpressung in der zweiten Reibkontaktfläche, und mögliche Kaltverschweißungen zwischen Welle und Gebläserad werden vermieden. Dadurch wird ein leichtes Demontieren des Gebläserads von der Welle ermöglicht.

Das zweite Reibmoment in der zweiten Reibkontaktfläche ist vorteilhaft größer als das Gewindereibmoment im Gewindeabschnitt. Das zweite Reibmoment entspricht vorteilhaft mindestens dem 1,3fachen, insbesondere mindestens dem 1,5fachen des Gewindereibmomentes.

Es ist vorteilhaft vorgesehen, dass eine das erste Reibmoment erzeugende Tangentialkraft an der ersten Reibkontaktfläche in einem Abstand zur Drehachse in Umfangsrichtung der Drehachse wirkt. Der Abstand zur Drehachse entspricht vorteilhaft mindestens dem 1,5fachen Innenradius der Mutter am Gewindeabschnitt. Die Tangentialkraft entspricht der resultierenden Reibkontaktkraft in der ersten Reibkontaktfläche. Die Tangentialkraft erzeugt aufgrund ihres Abstands zur Drehachse das erste Reibmoment, welches um die Drehachse wirkt. Vergrößert sich der Durchmesser der ersten Reibkontaktfläche, erhöht sich der Abstand zwischen der wirkenden Tangentialkraft und der Drehachse. Dabei erhöht sich auch das erste Reibmoment.

Es ist vorteilhaft vorgesehen, dass die zweite Reibkontaktfläche und die Drehachse einen Winkel von mindestens 15°, vorteilhaft von mindestens 20°, insbesondere von mindestens 25° einschließen. Vorteilhaft schließen die zweite Reibkontaktfläche und die Drehachse einen Winkel von höchstens 80°, vorteilhaft von höchstens 75°, insbesondere von höchstens 70° ein. Vorteilhaft ist die zweite Reibkontaktfläche so ausgebildet und angeordnet, dass in der zweiten Reibkontaktfläche keine Selbsthemmung zwischen dem Gebläserad und der Mutter besteht.

Mit sich reduzierendem Winkel zwischen der zweiten Reibkontaktfläche und der Drehachse erhöht sich bei gleichbleibendem Anzugsmoment die Kontaktkraft zwischen der Welle und dem Gebläserad und damit auch die Konusreibkraft in der zweiten Reibkontaktfläche. Infolge dessen erhöht sich auch das zweite Reibmoment. Durch den Keileffekt zwischen Gebläserad und Welle und der daraus resultierenden Verstärkung der Konusreibkraft kann das Anzugsmoment reduziert werden und dennoch ein ausreichend großes zweites Reibmoment erzeugt werden, so dass das Gebläserad auf der Welle im Betrieb ohne Schlupf reibschlüssig gehalten ist. Dadurch ist das Lösemoment der Mutter beim Demontieren des Gebläserads von der Welle reduziert.

Beträgt der Winkel zwischen der zweiten Reibkontaktfläche und der Drehachse vorteilhaft mindestens 15°, so ist die in Richtung der Drehachse gemessene Länge des Konus gegenüber der Länge eines selbsthemmenden Konus vergleichsweise gering. Daher ermöglicht der Winkel zwischen Reibkontaktfläche und der Drehachse eine bauraumsparende Befestigung des Gebläserads auf der Welle in axialer und radialer Richtung der Drehachse.

Dadurch, dass zwischen Gebläserad und der Welle keine Selbsthemmung besteht, kann das Gebläserad, sofern die Mutter von der Welle gelöst ist, auf einfache Weise von der Welle gezogen werden, insbesondere ohne Hilfe eines Spezialwerkzeuges wie beispielsweise eines Abziehers.

Es ist vorteilhaft vorgesehen, dass die zweite Reibkontaktfläche aus zwei in Kontakt stehenden Flächen besteht, wobei die Flächen eine Anlagefläche der Welle und eine Anlagefläche, insbesondere eine zweite Anlagefläche des Gebläserads sind. Die Anlageflächen kontaktieren einander vorteilhaft flächig. Es kann aber auch nur eine Linienanlage an einem insbesondere großen Durchmesser des Konus der Welle und der Nabe vorgesehen sein. Vorteilhaft kann eine der zwei in Kontakt stehenden Flächen der zweiten Reibfläche eine Beschichtung und/oder eine Profilierung zur Reibwerterhöhung besitzen. Aus der Reibwerterhöhung resultiert eine Erhöhung der maximal wirkenden Tangentialkraft und damit eine Erhöhung des zweiten Reibmomentes.

Es ist vorteilhaft vorgesehen, dass in Draufsicht auf eine die Drehachse enthaltende Längsebene der Winkel zwischen der zweiten Anlagefläche des Gebläserads und der Drehachse kleiner ist als der Winkel zwischen der Anlagefläche der Welle und der Drehachse. Vorteilhaft beträgt die Differenz der Winkel weniger als ein Grad, insbesondere weniger als ein halbes Grad. Dadurch wird sichergestellt, dass bei der Montage des Gebläserads auf die Welle die zweite Anlagefläche des Gebläserads und die Anlagefläche der Welle in einem maximalen Abstand zur Drehachse in Kontakt kommen. Dadurch stellt sich auch ein maximaler Abstand zwischen der Tangentialkraft und der Drehachse ein. Der maximale Abstand zwischen der Tangentialkraft und der Drehachse bedingt auch ein möglichst großes übertragbares zweites Reibmoment.

Vorteilhaft besteht die erste Reibkontaktfläche aus zwei in Kontakt stehenden Flächen, wobei die Flächen eine Anlagefläche der Mutter und eine Anlagefläche, insbesondere eine erste Anlagefläche des Gebläserads sind. Vorzugsweise besitzt mindestens eine der zwei in Kontakt stehenden Flächen der ersten Reibfläche eine Beschichtung und/oder eine Profilierung, zur Reibwerterhöhung. Mittels der Beschichtung oder an der Profilierung kann der Reibwert in der ersten Reibkontaktfläche und damit die Tangentialkraft erhöht werden. Dadurch kann das erste Reibmoment höher als das Gewindereibmoment ausgelegt werden.

Es ist vorteilhaft vorgesehen, dass das Gewinde als Feingewinde ausgebildet ist. Das Feingewinde ist entsprechend der DIN ISO 261/262 definiert. Das Feingewinde ist vorzugsweise als metrisches Gewinde mit einem Nenndurchmesser 12 und einer Steigung von 1,25 ausgebildet. Aufgrund der geringen Steigung ist der anfängliche Widerstand beim Festdrehen der Mutter gegenüber einem Regelgewinde reduziert. Dadurch ist ein Mitdrehen der Mutter durch das Gebläserad vereinfacht. Zusätzlich kann über das Feingewinde eine höhere Belastung aufgenommen werden, so dass die Welle im Gewindeabschnitt mit einem geringen Durchmesser ausgebildet sein kann.

Es ist vorteilhaft vorgesehen, dass an der Welle ein zylindrischer Abschnitt ausgebildet ist und das Gebläserad auf dem zylindrischen Abschnitt zur Welle gegen Schrägstellung abgestützt ist. Dadurch wird eine hohe Rundlaufgenauigkeit des Gebläserads ermöglicht und eine Unwucht des Gebläserads vermieden. Da die Herstellbarkeit eines zylindrischen Abschnitts gegenüber einem Gewindeabschnitt mit geringen Toleranzen vergleichsweise einfach und günstig ist, kann durch die Trennung der Funktionen von Abstützung und Klemmung des Gebläserads an der Welle eine genaue und günstige Ausrichtung des Gebläserads auf der Welle erreicht werden.

Vorteilhaft umfasst das Gebläserad eine Nabe und ein auf der Nabe befestigtes Rad. Die Nabe besteht vorteilhaft aus einem Metall, insbesondere einem Sintermetall, bevorzugt aus einem gesinterten Stahlwerkstoff. Die Nabe besteht insbesondere mindestens teilweise, vorzugsweise vollständig, aus einem gehärteten Kohlenstoffstahl.

Ausführungsbeispiele der Erfindung werden im Folgenden anhand der Zeichnung erläutert. Es zeigen:
- Fig. 1: eine schematische Darstellung eines Blasgerätes,
- Fig. 2: eine perspektivische Explosionsdarstellung des Gebläserads und der Antriebswelle des Blasgerätes nach Fig. 1,
- Fig. 3: eine perspektivische Explosionsdarstellung der Nabe des Gebläserads und der Antriebswelle des Blasgerätes nach Fig. 1,
- Fig. 4: eine Schnittdarstellung des Gebläserads und der Antriebswelle des Blasgerätes nach Fig. 1,
- Fig. 5: eine Seitenansicht der Nabe des Gebläserads und der Antriebswelle des Blasgerätes nach Fig. 1,
- Fig. 6: eine Schnittdarstellung der Nabe des Gebläserads und der Antriebswelle des Blasgerätes nach Fig. 1,
- Fig. 7: eine Schnittdarstellung der Antriebswelle entlang der Linie VII-VII in Fig. 6,
- Fig. 8: eine Schnittdarstellung der Antriebswelle entlang der Linie VIII-VIII in Fig. 6,
- Fig. 9: eine Schnittdarstellung der Antriebswelle entlang der Linie IX-IX in Fig. 6,
- Fig. 10: eine Explosionsdarstellung der Nabe des Gebläserads und der Antriebswelle des Blasgerätes nach Fig. 1 in Seitenansicht,
- Fig. 11: eine geschnittene Explosionsdarstellung der Nabe des Gebläserads und der Antriebswelle des Blasgerätes nach Fig. 1 und
- Fig. 12: eine vergrößerte ausschnittsweise Schnittdarstellung des Gebläserads und der Antriebswelle des Blasgerätes nach Fig. 1.

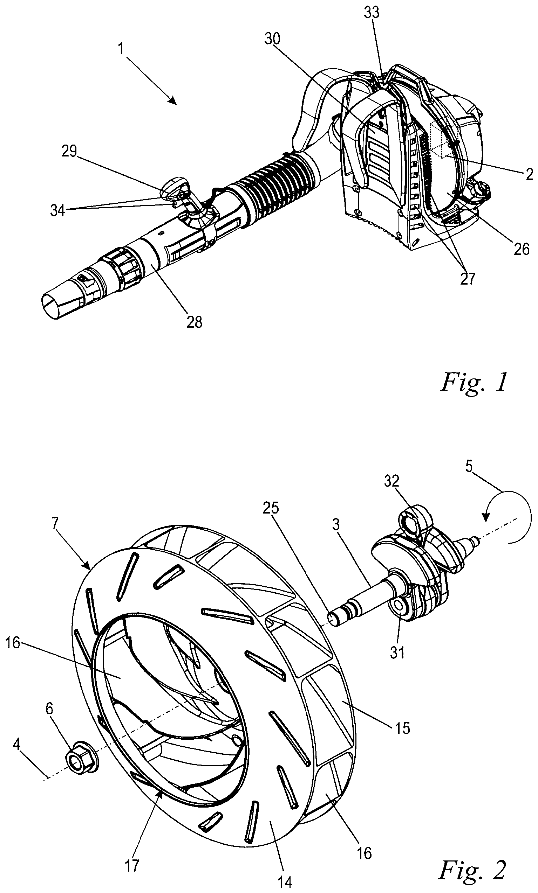

Fig. 1 zeigt als Ausführungsbeispiel für ein handgeführtes Arbeitsgerät ein Blasgerät 1. Das Blasgerät 1 besitzt eine Rückentrage 30, die vom Bediener auf dem Rücken zu tragen ist und an der ein Gehäuse 26 festgelegt ist. Das Blasgerät 1 kann jedoch auch ein handgetragenes Blasgerät 1 sein. Anstatt bei einem Blasgerät 1 kann die vorliegende Erfindung auch bei anderen handgeführten Arbeitsgeräten, insbesondere bei Sauggeräten, Motorsägen, Trennschleifern, Freischneidern oder dgl. vorteilhaft sein. Im Gehäuse 26 ist ein Antriebsmotor 2 angeordnet, der im Ausführungsbeispiel als Verbrennungsmotor ausgebildet ist. Der schematisch dargestellte Antriebsmotor 2 ist vorteilhaft ein Einzylindermotor, insbesondere ein Zweitaktmotor oder ein gemischgeschmierter Viertaktmotor. Der Antriebsmotor 2 kann jedoch auch ein Elektromotor sein, der insbesondere von einem Akku mit Energie versorgt ist. Das Blasgerät 1 besitzt eine Gebläsespirale 33, durch die ein Arbeitsluftstrom gefördert wird. An die Gebläsespirale 33 schließt ein Blasrohr 28 an. Am Blasrohr 28 ist ein Handgriff 29 angeordnet, mit dem der Bediener das Blasrohr 28 führen kann. Am Handgriff 29 sind Bedienelemente 34, nämlich ein Gashebel, eine Gashebelsperre sowie ein Stoppschalter angeordnet. Es können auch weitere oder andere Bedienelemente 34 vorgesehen sein. Im Gehäuse 26 ist ein Gebläserad 7 (siehe Fig. 2) angeordnet, welches über eine Welle 3 des Antriebsmotors 2 angetrieben ist. Im Ausführungsbeispiel ist die Welle 3 die Kurbelwelle des Antriebsmotors 2. Das Gebläserad 7 saugt Arbeitsluft über Luftansauggitter 27 an, die am Gehäuse 26 und an der Rückentrage 30 vorgesehen sind. Das Gebläserad 7 fördert die Arbeitsluft in die Gebläsespirale 33 und von dort in das Blasrohr 28. Das Gebläserad 7 kann jedoch auch ein Gebläserad zur Förderung von Kühlluft, insbesondere von Kühlluft für den Antriebsmotor 2, sein.

In Fig. 2 ist die Welle 3 des in Fig. 2 nicht gezeigten Antriebsmotors 2 gezeigt. Ein nicht dargestellter Kolben des Antriebsmotors 2 treibt die Welle 3 über einen Pleuel 32 an, wobei der Pleuel 32 über einen Hubzapfen 31 mit der Welle 3 verbunden ist. Die Welle 3 besitzt ein erstes Ende 25. Das Gebläserad 7 ist über das erste Ende geschoben und mittels einer Mutter 6 auf der Welle 3 befestigt. Die Welle 3 besitzt eine Drehachse 4 und wird über den Kolben im Ausführungsbeispiel in Blickrichtung der Drehachse 4 von der Mutter 6 ausgehend zum Pleuel 32 verlaufend gegen den Uhrzeigersinn in einer Drehrichtung 5 angetrieben.

Das Gebläserad 7 ist im Ausführungsbeispiel als Radialgebläse ausgebildet und besitzt Schaufeln 16 zur Förderung der Luft. Das Gebläserad 7 besitzt einen einteiligen Grundkörper, der aus zwei Scheiben 14 und 15 aufgebaut ist, zwischen denen sich die Schaufeln 16 erstrecken. Die Schaufeln 16 des Gebläserads 7 verlaufen spiralförmig zur Drehachse 4 hin. Die Scheibe 14 besitzt eine Öffnung 17. Im Betrieb des handgeführten Arbeitsgeräts 1 rotiert das Gebläserad 7 in Drehrichtung 5 um die Drehachse 4, und die Arbeitsluft wird über die Öffnung 17 angesaugt, durch die Schaufeln 16 des Gebläserads 7 nach außen gefördert und in die in Fig. 2 nicht dargestellte Gebläsespirale 33 geleitet. Von dort aus strömt die Arbeitsluft durch das Blasrohr 28 hindurch in die Umgebung.

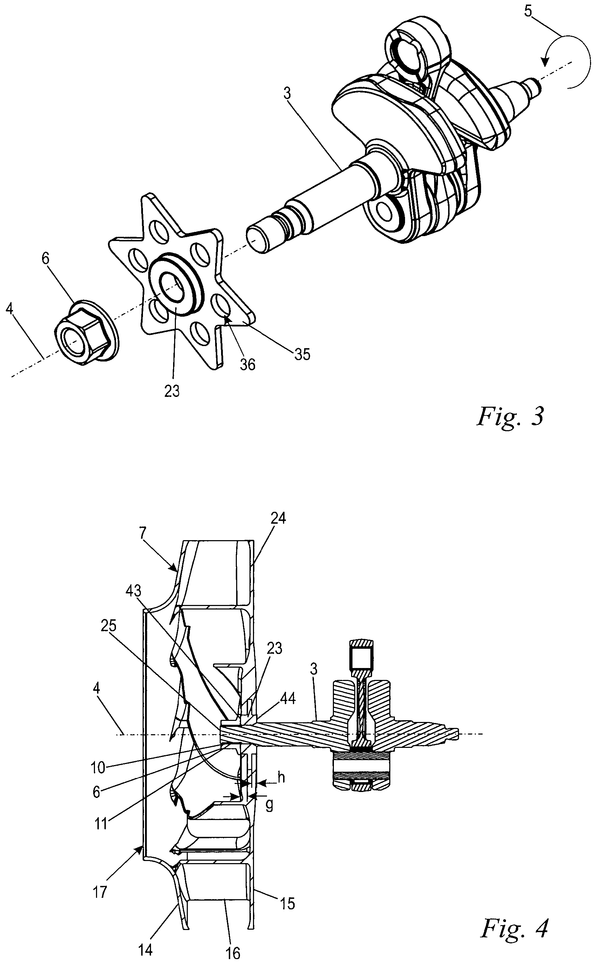

Fig. 3 zeigt dasselbe Ausführungsbeispiel wie Fig. 2, wobei nur eine Nabe 23 des Gebläserads 7 dargestellt ist. Die Nabe 23 ist mit der Scheibe 15 des Grundkörpers des Gebläserads 7 verbunden, insbesondere darin eingebettet, im Ausführungsbeispiel umspritzt. Die Nabe 23 ist auf der Welle 3 mittels der Mutter 6 geklemmt gehalten. Solange die Mutter 6 nicht oder nicht ausreichend angezogen ist, kann sich die Nabe 23 des Gebläserads 7 auf der Welle 3 drehen. Im Ausführungsbeispiel besteht die Nabe 23 aus einem Sintermaterial, insbesondere aus einem gesinterten Stahlwerkstoff. Vorzugsweise besteht die Nabe 23 mindestens teilweise, insbesondere vollständig, aus gehärtetem Kohlenstoffstahl. Die Nabe 23 des Gebläserads 7 ist im Ausführungsbeispiel sternförmig ausgebildet und besitzt sechs in radialer Richtung zur Drehachse zeigende Sternzacken 35. Jede einzelne Sternzacke 35 enthält eine Öffnung 36, die parallel zur Drehachse 4 verläuft.

Wie in Fig. 4 gezeigt, umfasst das Gebläserad 7 die Nabe 23 und ein Rad 24. Die Nabe 23 ist in dem Rad 24 eingegossen, in vorteilhafter Ausführung in das Rad 24 eingelegt und umspritzt. Die separate Ausbildung des Rads 24 und der Nabe 23 ermöglicht eine vereinfachte Herstellung von eng tolerierten Oberflächen in den Bereichen des Gebläserads 7, die mit der Welle 3 und der Mutter 6 in Kontakt treten. Das Rad 24 besteht im Ausführungsbeispiel aus einem Kunststoff, kann vorteilhaft auch aus einer Aluminiumlegierung oder einem anderen Werkstoff bestehen. Das gegossene Rad 24 verläuft durch die Öffnungen 36 der Nabe 35. Dadurch entsteht zwischen der Nabe 23 und dem Rad 24 eine formschlüssige Verbindung, die in Umfangsrichtung zur Drehachse 4 besonders belastbar ist. Die Sternform der Nabe 23 ergibt eine in Umfangsrichtung zur Drehachse hoch belastbare formschlüssige Verbindung zwischen Nabe 23 und Rad 24. Anstelle der Sternform kann auch eine andere zweckmäßige, in Umfangsrichtung formschlüssige Kontur gewählt werden, die Abschnitte unterschiedlichen Durchmessers aufweist. Für solche Konturen gelten gleichermaßen die nachfolgenden Ausführungen zur Sternform.

Die Nabe 23 unterliegt anderen Belastungen als das Rad 24 und ist im Ausführungsbeispiel aus einem anderen Werkstoff hergestellt. Durch die Herstellung des Gebläserads 7 aus mindestens zwei verschiedenen Werkstoffen kann die Masse des Gebläserads 7 reduziert werden. In einem vorteilhaften Ausführungsbeispiel kann das Gebläserad 7 auch aus einem Werkstoff und/oder einteilig hergestellt sein. Die Nabe 23 besitzt zwei äußere, in etwa senkrecht zur Drehachse 4 stehende Stirnseiten 43, 44, wobei die erste Stirnseite 43 der Nabe 23 zur Mutter 6 zugewandt und die zweite Stirnseite 44 der Nabe 23 von der Mutter abgewandt ist. Die Sternzacken 35 besitzen einen in Richtung der Drehachse 4 gemessenen Abstand g zur ersten Stirnseite 43 der Nabe 23 und einen in Richtung der Drehachse 4 gemessenen Abstand h zur zweiten Stirnseite 44 der Nabe 23. Die Sternzacken 35 sind auf der Nabe 23 so ausgebildet, dass der Abstand g größer ist als der Abstand h. Demnach liegen die Sternzacken 35 näher an der zweiten Stirnseite 44 als an der ersten Stirnseite 43.

In Fig. 4 ist das Gebläserad 7 auf der Welle 3 montiert gezeigt. Dabei steht die Nabe 23 des Gebläserads 7 mit der Welle 3 in Kontakt. Am gebläseradseitigen ersten Ende 25 der Welle 3 besitzt die Welle 3 ein Gewinde 10, welches sich über einen Gewindeabschnitt 11 erstreckt. Die Mutter 6 ist auf den Gewindeabschnitt 11 der Welle 3 gegen die Nabe 23 des Gebläserads 7 geschraubt. Um ein Loslösen der Mutter 6 im Betrieb des handgeführten Arbeitsgeräts 1 zu vermeiden, ist das Gewinde 10 der Welle 3 so ausgebildet, dass sich die Mutter 6 entgegen der Drehrichtung 5 der Welle 3 gegen die Nabe 23 des Gebläserads 7 festspannt. Da im Ausführungsbeispiel die Drehrichtung 5 der Welle 3 in Richtung der Drehachse 4 vom Gebläserad 7 zum Pleuel 32 hin verlaufend entgegen dem Uhrzeigersinn verläuft, ist das Gewinde 10 als Rechtsgewinde ausgebildet.

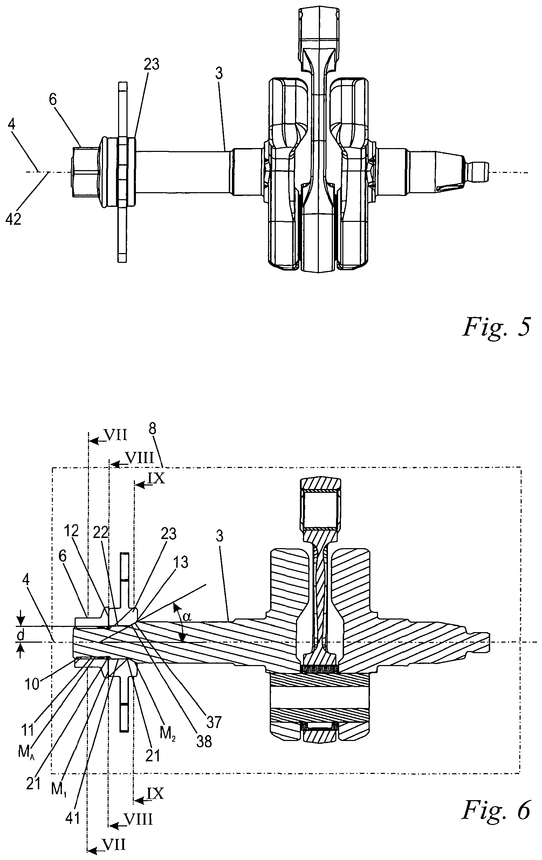

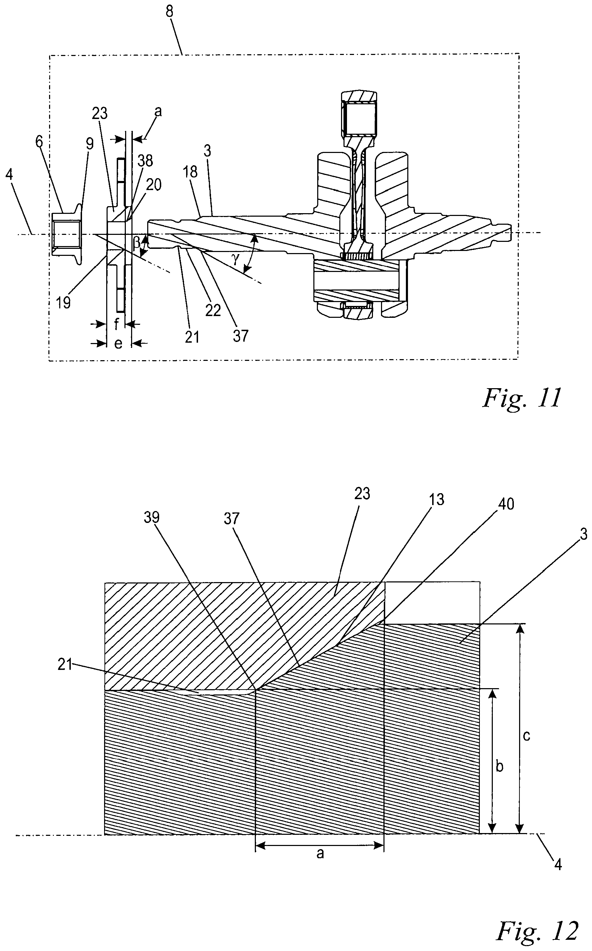

Wie in den Figuren 5 und 6 gezeigt, ist die Nabe 23 auf der Welle 3 über die Mutter 6 geklemmt gehalten befestigt. Wie in der Fig. 6 gezeigt, sind an der Welle 3, ausgehend von ihrem ersten Ende 25 zu dem Pleuel 32 hin verlaufend, der Gewindeabschnitt 11, ein Freistich 21, ein zylindrischer Abschnitt 22, ein Freistich 21 und ein Konus 37 ausgebildet. Die Zentrierung der Nabe 23 erfolgt durch den Konus 37 der Welle 3 und durch den Konus 38 der Nabe 23. Der zylindrische Abschnitt 22 der Welle 3 weist einen nur geringfügig kleineren Durchmesser als der zylindrische Abschnitt 41 der Nabe 23 auf und dient damit zur Begrenzung der Schrägstellung einer Längsachse 42 der Nabe 23 bezüglich der Drehachse 4. Zweckmäßig kann der Gewindeabschnitt 11 bis an den Freistich 21 der Welle 3 herangezogen und das Gewinde 10 derart ausgebildet sein, dass sich die Nabe 23 auch direkt auf dem Gewindeabschnitt 11 abstützen kann. Der Konus 37 der Welle 3 öffnet sich in Richtung des Pleuels 32. Die Nabe 23 des Gebläserads 7 besitzt einen zylindrischen Abschnitt 41 mit einer in Richtung der Längsachse 42 der Nabe 23 gemessenen Länge e (Fig. 11). Der zylindrische Abschnitt 41 geht im Ausführungsbeispiel in einen zum Pleuel 32 hin öffnenden Konus 38 der Nabe 23 über. Der zylindrische Abschnitt 41 erstreckt sich insbesondere über mehr als die Hälfte einer in Richtung der Längsachse 42 der Nabe 23 gemessenen Länge f (Fig. 11) der Nabe 23. Es kann zweckmäßig sein, anstelle oder ergänzend zum Konus 38 der Nabe 23 eine andere Innenkontur in der Nabe 23 vorzusehen, in der die Nabe 23 ihren radial zur Drehachse 4 gemessenen Abstand s gegenüber ihrem zylindrischen Abschnitt 41 vergrößert. Dadurch, dass die Sternzacken 35 näher an der zweiten Stirnseite 44 der Nabe 23 als an der ersten Stirnseite 43 der Nabe 23 liegen, wird die Nabe 23 an ihrem Konus 38 verstärkt und ein Aufweiten der Nabe 23 beim Anpressen an den Konus 37 der Welle 3 vermieden. Auch bei anderen zweckmäßigen, in Umfangsrichtung formschlüssigen Konturen kann ein Aufweiten der Nabe 23 vermieden werden, wenn die entsprechende Kontur näher an der zweiten Stirnseite 44 der Nabe 23 als an der ersten Stirnseite 43 der Nabe 23 liegt.

Wie Fig. 6 zeigt, liegt in montiertem Zustand die Nabe 23 mit ihrem zylindrischen Abschnitt 41 an dem zylindrischen Abschnitt 22 der Welle 3 in radialer Richtung der Drehachse 4 an. Die zylindrischen Abschnitte 21 und 41 stützen die Nabe 23 auf der Welle 3 ab und begrenzen damit die Schrägstellung der Längsachse 42 der Nabe 23. In axialer Richtung der Drehachse 4 kommt die Nabe 23 in ihrem Konus 38 an dem Konus 37 der Welle 3 in einer zweiten Reibkontaktfläche 13 zur Anlage, wodurch die Nabe 23 auf der Welle 3 zentriert wird. Die auf den Gewindeabschnitt 11 der Welle 3 geschraubte Mutter 6 kontaktiert die Nabe 23 des Gebläserads 7 in einer ersten Reibkontaktfläche 12 und klemmt dadurch die Nabe 23 gegen den Konus 37 der Welle 3.

Wie in Fig. 6 gezeigt, bildet die zweite Reibkontaktfläche 13 mit der Drehachse 4 einen Kontaktflächenwinkel α, welcher sich in Richtung des Pleuels 32 hin öffnet. Der Kontaktflächenwinkel α beträgt im Ausführungsbeispiel mindestens 15°, insbesondere mindestens 20°, bevorzugt mindestens 25°. Der Kontaktflächenwinkel a beträgt im Ausführungsbeispiel höchstens 85°, insbesondere höchstens 80°, bevorzugt höchstens 75°. Durch den Kontaktflächenwinkel α der zweiten Reibkontaktfläche 13 ist die Welle 3 in ihrem Konus 37 keilartig gegen den Konus 28 der Nabe 23 gespannt. Durch den in der zweiten Reibkontaktfläche 13 auftretenden Keileffekt wird die Kontaktkraft zwischen Welle 3 und Nabe 23 im Vergleich zu einer radial zur Drehachse 4 ausgerichteten Kontaktfläche verstärkt. Je geringer der Kontaktflächenwinkel α ist, wobei der Betrag 0° für den Kontaktflächenwinkel α ausgeschlossen ist, desto größer ist die in der zweiten Reibkontaktfläche 13 wirkende Kontaktkraft. Im Ausführungsbeispiel ist der Kontaktflächenwinkel α mindestens so groß gewählt, dass keine Selbsthemmung zwischen dem Gebläserad 7 und der Welle 3 besteht.

Wie in Fig. 6 gezeigt, können in montiertem Zustand der Nabe 23 auf der Welle 3 verschiedene Momente übertragen werden. Über das Verspannen der Mutter 6 gegen die Nabe 23 entsteht ein geschlossener Kraftfluss, der vom Gewinde 10 der Welle 3 ausgeht, über die Mutter 6 in die Nabe 23 übergeht, und von der Nabe 23 wieder in die Welle 3 verläuft. Dabei kann im Gewindeabschnitt 11 zwischen Welle 3 und Mutter 6 ein Gewindereibmoment M_{A} übertragen werden. In der ersten Reibkontaktfläche 12 zwischen Mutter 6 und Nabe 23 kann ein erstes Reibmoment M₁ übertragen werden. In der zweiten Reibkontaktfläche 13 zwischen Nabe 23 und Welle 3 kann ein zweites Reibmoment M₂ übertragen werden.

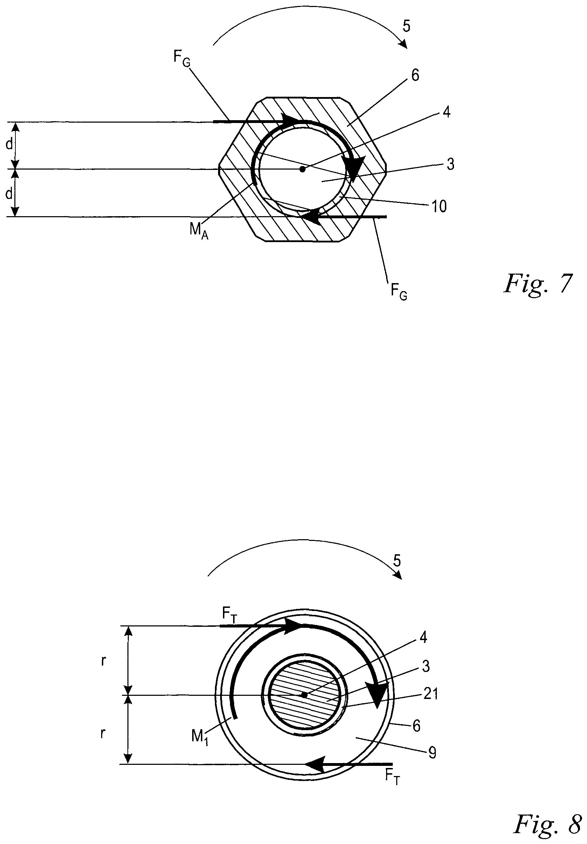

In Fig. 7 ist in einer Schnittansicht die Mutter 6 auf die Welle 3 geschraubt gezeigt. In gespanntem Zustand der Nabe 23 des Gebläserads 7 liegt im Gewindeabschnitt 11 eine Gewindereibkraft F_{G} an. Die Gewindereibkraft F_{G} wirkt tangential zur Umfangsrichtung der Drehachse 4 und besitzt einen Abstand d zur Drehachse 4. Der Abstand d entspricht dem Radius des Gewindes 10. Das wirkende Gewindereibmoment M_{A} bildet sich aus dem Produkt der Gewindereibkraft und deren Abstand d zur Drehachse 4. Das in dem Gewindeabschnitt 11 zwischen der Mutter 6 und der Welle 3 wirkende Gewindereibmoment M_{A} kann vergrößert werden, indem der Abstand d und/oder die Gewindereibkraft F_{G} vergrößert werden. Das wirkende Gewindereibmoment M_{A} kann mit und entgegen der Drehrichtung 5 zwischen der Mutter 6 und der Welle 3 übertragen werden. Im Ausführungsbeispiel ist das Gewinde 10 als Feingewinde ausgebildet. In vorteilhaftem Ausführungsbeispiel ist das Feingewinde entsprechend der DIN ISO 261/262 definiert. In vorteilhaftem Ausführungsbeispiel ist das Gewinde 10 als metrisches Feingewinde mit einem Nenndurchmesser von 12 mm und einer Steigung von 1,25 ausgebildet.

In Fig. 8 ist in einer Schnittansicht die erste Reibkontaktfläche 12 der Mutter 6 und der Nabe 23 gezeigt. In der ersten Reibkontaktfläche 12 sind die Mutter 6 und die Nabe 23 gegeneinander verspannt, so dass zwischen der Mutter 6 und der Nabe 23 eine Kontaktkraft entsteht. Diese Kontaktkraft erzeugt eine Tangentialkraft F_{T}, die einer Reibkraft entspricht. Die Tangentialkraft F_{T} wirkt in der ersten Reibkontaktfläche 12 tangential zur Drehachse 4 und besitzt einen Abstand r zur Drehachse 4. Das sich in der ersten Reibkontaktfläche 12 bildende erste Reibmoment M₁ ist das Produkt aus der Tangentialkraft F_{T} und ihrem Abstand r zur Drehachse 4. Demnach kann das in der ersten Reibkontaktfläche 12 wirkende erste Reibmoment M₁ vergrößert werden, indem der Abstand r und/oder die Tangentialkraft F_{T} vergrößert werden. Der Abstand r nimmt zu, wenn beispielsweise der Abstand der ersten Reibkontaktfläche 12 zur Drehachse 4 oder zumindest der Außendurchmesser der Reibkontaktfläche 12 vergrößert wird. Der Abstand r beträgt mindestens das 1,3fache, in vorteilhafter Ausführung mindestens das 1,5fache, insbesondere mindestens das 1,7fache des Abstandes d. Das erste Reibmoment M₁ kann mit und entgegen der Drehrichtung 5 zwischen der Mutter 6 und der Nabe 23 übertragen werden.

Im Ausführungsbeispiel ist die erste Reibkontaktfläche 12 zwischen der Mutter 6 und der Nabe 23 so ausgebildet, dass das erste Reibmoment M₁ größer als das im Gewindeabschnitt 11 zwischen Mutter 6 und Welle 3 wirkende Gewindereibmoment M_{A} ist. Stehen Mutter 6 und Nabe 23 in Kontakt und dreht sich die Nabe 23 relativ zur Welle 3, so wird die Mutter 6 von der Nabe 23 mitgenommen.

Die Drehung der Nabe 23 relativ zur Welle 3 resultiert daraus, dass die Nabe 23 und die Welle 3 lediglich reibschlüssig verbunden sind und das initial aufgebrachte Anzugsmoment das Trägheitsmoment des Gebläserads 7 nicht oder nicht vollständig kompensiert. Solange die Nabe 23 auf der Welle 3 durchdreht, führt die Nabe 23 eine Relativbewegung entgegen der Drehrichtung der Welle 3 aus.

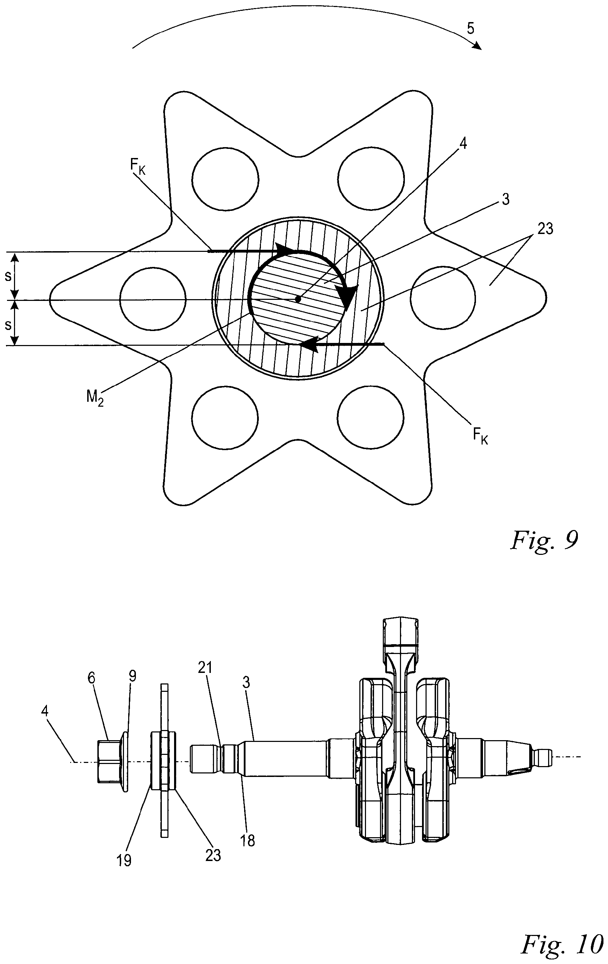

In Fig. 9 ist eine Schnittansicht der Welle 3 gezeigt, welche durch die zweite Reibkontaktfläche 13 zwischen der Nabe 23 und der Welle 3 verläuft. In der zweiten Reibkontaktfläche 13 sind die Nabe 23 und die Welle 6 gegeneinander verspannt, so dass zwischen der Nabe 23 und der Welle 3 eine Kontaktkraft entsteht. Diese Kontaktkraft erzeugt eine Konusreibkraft F_{K}. Die Konusreibkraft F_{K} wirkt in der zweiten Reibkontaktfläche 13 tangential zur Drehachse 4 und besitzt einen Abstand s zur Drehachse 4. Das sich in der zweiten Reibkontaktfläche 13 bildende zweite Reibmoment M₂ ist das Produkt aus der Konusreibkraft F_{K} und ihrem Abstand s zur Drehachse 4. Demnach kann das in der zweiten Reibkontaktfläche 13 wirkende zweite Reibmoment M₂ vergrößert werden, indem der Abstand s und/oder die Konusreibkraft F_{K} vergrößert werden. Das zweite Reibmoment M₂ kann mit und entgegen der Drehrichtung 5 zwischen der Nabe 23 und der Welle 3 übertragen werden. Im Ausführungsbeispiel ist der Abstand s zwischen der Konusreibkraft F_{K} und der Drehachse 4 größer als der Abstand d. Die Reibpaarungen zwischen der Mutter 6 und der Welle 3, der Nabe 23 und der Welle 3 sowie der Nabe 23 und der Mutter 6 weisen einen unterschiedlichen radial zur Drehachse 4 gemessenen Abstand (d, s, r) zur Drehachse 4 auf. In einem vorteilhaften Ausführungsbeispiel ist der Abstand r zwischen der Drehachse 4 und der Tangentialkraft F_{T} größer als der Innenradius d der Mutter 6. Auf diese Weise ist sichergestellt, dass die Mutter 6 solange von der Nabe 23 mitgenommen wird, wie die Nabe 23 auf der Welle 3 durchdreht. In vorteilhafter Ausführung ist der Abstand s kleiner als der Abstand r und der Abstand s größer als der Innenradius d der Mutter 6. In vorteilhafter Ausführung beträgt der Abstand s mindestens dem 1,2fachen Abstand d. In einem vorteilhaften Ausführungsbeispiel kann der Abstand s auch kleiner als der Innenradius d der Mutter 6 sein.

Das Gebläserad 7 wird nach dem nachfolgend beschriebenen Verfahren auf der Welle 3 befestigt:
Das Gebläserad 7 wird auf die Welle 3 geschoben und über den Konus 37 der Welle 3 zentriert. Anschließend wird die Mutter 6 auf den Gewindeabschnitt 11 der Welle 3 geschraubt, so dass sich die Mutter 6 und das Gebläserad 7 in der ersten Reibkontaktfläche 12 kontaktieren. Die Mutter 6 ist dabei vom Bediener mit einem Mindest-Anzugsmoment, das zwischen 10% und 100% des Betriebsdrehmomentes beträgt, gegen das Gebläserad 7 anzuziehen. Wird die Mutter 6 mit einem Anzugsmoment angezogen, das weniger als das Mindest-Anzugsmoment beträgt, so ist das über die erste Reibkontaktfläche 12 zwischen der Mutter 6 und dem Gebläserad 7 übertragbare erste Reibmoment M₁ nicht zwingend größer als das wirkende Gewindereibmoment M_{A}. Um ein Nachziehen der Verbindung im Betrieb zu gewährleisten, muss der Bediener die Mutter 6 mindestens mit dem konstruktiv festgelegten Mindest-Anzugsmoment anziehen. Das Mindest-Anzugsmoment ist dabei so ausgelegt, dass dieses zwischen 10% und 100% des Betriebsdrehmomentes beträgt. Im Ausführungsbeispiel beträgt das Betriebsdrehmoment in etwa 100 Nm. In einem vorteilhaften Ausführungsbeispiel beträgt das Mindest-Anzugsmoment mindestens 30% des Betriebsdrehmomentes. Das Mindest-Anzugsmoment beträgt in vorteilhafter Ausführung höchstens 90%, insbesondere höchstens 80% des Betriebsdrehmomentes. Demnach ist es ausreichend, wenn der Bediener die Mutter 6 nur mit einem geringen Anzugsmoment gegen das Gebläserad 7 verspannt. Im Betrieb des handgeführten Arbeitsgeräts 1 spannt sich die Mutter 6 ohne Zutun des Bedieners solange nach, bis die Summe aus dem wirkenden Gewindereibmoment M_{A} und dem zweiten Reibmoment M₂ dem auf das Gebläserad 7 wirkenden Betriebsdrehmoment entspricht und die Nabe 23 des Gebläserads 7 damit nicht mehr auf der Welle 3 durchrutscht. Rutscht das Gebläserad 7 auf der Welle 3 durch, entsteht eine Relativbewegung zwischen dem Gebläserad 7 und der Welle 3. Da sich die Mutter 3 und die Nabe 23 bereits in Reibkontakt miteinander befinden und die erste Reibpaarung derart abgestimmt ist, dass das erste Reibmoment M₁ zwischen der Mutter 6 und der Nabe 23 stets größer ist als das im Gewindeabschnitt 11 wirkende Gewindereibmoment M_{A} zwischen der Welle 3 und der Mutter 6, findet keine Relativbewegung zwischen der Nabe 23 und der Mutter 3 statt, sondern die Mutter 6 wird von dem Gebläserad 7 relativ zur Welle 3 mitgedreht. Dabei dreht sich die Mutter 6 weiter auf dem Gewindeabschnitt 11 und spannt sich axial in Richtung der Drehachse 4 über das Gebläserad 7 gegen den Konus 37 der Welle 3. Das Gebläserad 7 wird dabei gegen den Konus 37 der Welle 3 gedrückt und nachgespannt, wodurch sich die an der zweiten Reibkontaktfläche 13 wirkende Normalkraft erhöht. Ist das zweite Reibmoment M₂ ausreichend groß, dass keine Relativbewegung zwischen Gebläserad 7 und der Welle 7 mehr stattfindet, ist die Mutter 6 mit dem finalen wirkenden Gewindereibmoment M_{A} angezogen. Zum Lösen der Mutter 3 ist das finale wirkende Gewindereibmoment M_{A} sowie das erste Reibmoment M₁ zu überwinden. Das Lösen der Mutter 3 erfolgt unabhängig von dem zwischen dem Gebläserad 7 und dem Konus 37 der Welle 3 wirkenden zweiten Reibmoment M₂. Zum Lösen der Mutter 3 ist keine Drehung des Gebläserads 7 erforderlich, da sich die Mutter 6 nach Überwindung des ersten Reibmomentes M₁ gegenüber dem Gebläserad 7 drehen kann.

In vorteilhafter Ausführung wird das an dem Gebläserad 7 wirkende Betriebsmoment zu einem Drittel über das wirkende Gewindereibmoment M_{A} und zu zwei Drittel über das zweite Reibmoment M₂ auf die Welle 2 übertragen. Dadurch ist beim Lösen der Mutter 6 von der Welle 3 lediglich das wirkende Gewindereibmoment M_{A} in Höhe von einem Drittel des Betriebsmomentes zuzüglich des ersten Reibmomentes M₁ zwischen der Mutter 6 und der Nabe 23 zu überwinden. Das erste Reibmoment M₁ ist derart abgestimmt, dass es nur geringfügig größer als das Gewindereibmoment M_{G} ist. Auf diese Weise ist sichergestellt, dass die Relativbewegung nicht zwischen der Nabe 23 und der Mutter 6, sondern zwischen der Mutter 6 und der Welle 3 erfolgt. Zum Lösen der Mutter 6 ist demnach ein Moment von etwas mehr als zwei Drittel des Betriebsdrehmomentes aufzubringen.

In den Figuren 10 und 11 ist gezeigt, dass die Mutter 6 eine Anlagefläche 9 besitzt, welche auf der zum Pleuel 32 zugewandten Stirnseite der Mutter 6 ausgebildet ist. Die Nabe 23 des Gebläserads 7 besitzt eine erste Anlagefläche 19, die an der dem Pleuel 32 abgewandten Stirnseite der Nabe 23 ausgebildet ist, und eine zweite Anlagefläche 20, die an dem Konus 38 der Nabe 23 ausgebildet ist. Am Konus 37 der Welle 3 ist eine Anlagefläche 18 der Welle 3 ausgebildet. In Blickrichtung senkrecht zur Längsebene 8, welche die Drehachse 4 enthält, bildet die zweite Anlagefläche 20 des Gebläserads 7 mit der Drehachse 4 einen in Fig. 11 gezeigten Nabenkonuswinkel β, der in Richtung des Pleuels 32 geöffnet ist. In Blickrichtung senkrecht zur Längsebene 8 bildet die Anlagefläche 18 der Welle 3 mit der Drehachse 4 einen Wellenkonuswinkel γ, welcher ebenfalls zum Pleuel 32 hin geöffnet ist. Der Konus 37 der Welle 3 und der Konus 38 der Nabe 23 sind derart toleriert, dass sich vorteilhaft eine flächige Anlage oder zumindest eine linienförmige Anlage auf einem größten Radius c (Fig. 12) des Konus 37 der Welle 3 ergibt. Hierfür ist der Wellenkonuswinkel γ größer als der Nabenkonuswinkel β eingestellt. Da der Wellenkonuswinkel γ größer als der Nabenkonuswinkel β ist, kontaktieren sich die zweite Anlagefläche 20 des Gebläserads 7 mit der Anlagefläche 18 der Welle 3 in einem maximalen Abstand zur Drehachse 4 in der zweiten Reibkontaktfläche 13, welcher dem größten Radius c des Konus 37 der Welle 3 entspricht. Demnach wirkt auch die Konusreibkraft F_{K} in einem maximalen Abstand zur Drehachse 4, wodurch ein großes zweites Reibmoment M₂ erzeugt wird.

In einem vorteilhaften Ausführungsbeispiel ist der Wellenkonuswinkel γ maximal ein Grad, insbesondere maximal ein halbes Grad, größer als der Nabenkonuswinkel β.

Unterscheiden sich der Nabenkonuswinkel β und der Wellenkonuswinkel γ, so entspricht der Kontaktflächenwinkel α zwischen der zweiten Reibkontaktfläche 13 und der Drehachse 4 der Welle 3 dem Wellenkonuswinkel γ.

Wie Fig. 12 zeigt, erstreckt sich der Konus 37 der Welle 3 von einem ersten Ende 39 bis zu einem zweiten Ende 40 des Konus 37. Der Radius b der Welle 3 am ersten Ende 39 des Konus 37 ist kleiner als der Radius c der Welle 3 am zweiten Ende 40 des Konus 37. In einem vorteilhaften Ausführungsbeispiel entspricht der Radius b der Welle 3 am ersten Ende 39 mindestens 60%, insbesondere mindestens 65% des Radius c an dem zweiten Ende 40 des Konus 37 der Welle 3. Im Ausführungsbeispiel entspricht der Radius b des ersten Endes 39 maximal 80%, insbesondere maximal 75% des Radius c der Welle 3 am zweiten Ende des Konus 37. Der Konus 37 besitzt eine in Richtung der Drehachse 4 gemessene Länge a, welche dem in Richtung der Drehachse 4 gemessenen Abstand zwischen dem ersten Ende 39 und dem zweiten Ende 40 des Konus 37 der Welle 3 entspricht. In einem vorteilhaften Ausführungsbeispiel ist die Länge a kleiner als der Radius c am zweiten Ende 40 des Konus 37 der Welle 3, insbesondere kleiner als der Radius b der Welle 3 am ersten Ende 39 des Konus 37.

Die im Ausführungsbeispiel gezeigte Befestigung des Gebläserads 7 kann bei handgeführten Arbeitsgeräten eingesetzt werden, die ein Gebläserad 7 besitzen, wie beispielsweise Sauggeräte oder dgl. Dabei ist eine derartige sich selbst nachziehende Befestigung des Gebläserads 7 nicht nur auf Gebläseräder 7 zur Förderung von Arbeitsluft beschränkt. Das Gebläserad 7 kann insbesondere auch ein Gebläserad zur Förderung von Kühlluft, insbesondere von Kühlluft für den Verbrennungsmotor, sein.

## Patentansprüche

1. Handgeführtes Arbeitsgerät mit einem Antriebsmotor (2), mit einer vom Antriebsmotor (2) um eine Drehachse (4) rotierend angetriebenen Welle (3) und mit einem Gebläserad (7), wobei das Gebläserad (7) mittels einer Mutter (6) auf der Welle (3) reibkraftschlüssig gegen Verdrehung gehalten ist, wobei die Mutter (6) und die Welle (3) über einen Gewindeabschnitt (11) im Kontakt stehen, und zwischen der Mutter (6) und der Welle (3) über den Gewindeabschnitt (11) ein um die Drehachse (4) wirkendes Gewindereibmoment (M_{A}) übertragbar ist, wobei die Mutter (6) und das Gebläserad (7) über eine erste Reibkontaktfläche (12) in Kontakt stehen, und zwischen der Mutter (6) und dem Gebläserad (7) über die erste Reibkontaktfläche ein um die Drehachse (4) wirkendes erstes Reibmoment (M₁) übertragbar ist, und wobei das Gebläserad (7) und die Welle (3) über eine zweite Reibkontaktfläche (13) in Kontakt stehen, **dadurch gekennzeichnet, dass** die erste Reibkontaktfläche (12) so ausgebildet ist, dass bei einem Mindest-Anzugsmoment der Mutter (6), das zwischen 10% und 100% des Betriebsdrehmomentes liegt, das über die erste Reibkontaktfläche (12) zwischen der Mutter (6) und dem Gebläserad (7) übertragbare erste Reibmoment (M₁) größer ist als das wirkende Gewindereibmoment (M_{A}), so dass im Betrieb des Arbeitsgerätes (1) bei einer Relativbewegung zwischen dem Gebläserad (7) und der Welle (3) das Gebläserad (7) die Mutter (6) über das an der ersten Reibkontaktfläche (12) wirkende erste Reibmoment (M₁) mitbewegt, so dass die Mutter (6) das Gebläserad (7) gegen die Welle (3) über die zweite Reibkontaktfläche (13) nachspannt, und dass die zweite Reibkontaktfläche (13) zur Drehachse (4) konisch verläuft.

2. Arbeitsgerät nach Anspruch 1,
**dadurch gekennzeichnet, dass** eine das erste Reibmoment (M₁) bildende Tangentialkraft (FT) an der ersten Reibkontaktfläche (12) in einem Abstand (s) zur Drehachse (4) in Umfangsrichtung der Drehachse (4) wirkt, wobei der Abstand (s) mindestens dem 1,5fachen Innenradius (d) der Mutter (6) am Gewindeabschnitt (11) entspricht.

3. Arbeitsgerät nach Anspruch 1 oder 2,
**dadurch gekennzeichnet, dass** die zweite Reibkontaktfläche (13) und die Drehachse (4) einen Winkel (α) von mindestens 15° einschließen.

4. Arbeitsgerät nach einem der Ansprüche 1 bis 3,
**dadurch gekennzeichnet, dass** die zweite Reibkontaktfläche (13) und die Drehachse (4) einen Winkel (α) von höchstens 75° einschließen.

5. Arbeitsgerät nach einem der Ansprüche 1 bis 4,
**dadurch gekennzeichnet, dass** die zweite Reibkontaktfläche (13) so ausgebildet und angeordnet ist, dass in der zweiten Reibkontaktfläche (13) keine Selbsthemmung zwischen dem Gebläserad (7) und der Mutter (6) besteht.

6. Arbeitsgerät nach einem der Ansprüche 1 bis 5,
**dadurch gekennzeichnet, dass** die zweite Reibkontaktfläche (13) aus zwei im Kontakt stehenden Flächen besteht, wobei die Flächen eine Anlagefläche (18) der Welle (3) und eine zweite Anlagefläche (20) des Gebläserads (7) sind.

7. Arbeitsgerät nach Anspruch 6,
**dadurch gekennzeichnet, dass** in Draufsicht auf eine die Drehachse (4) enthaltende Längsebene (8) der Winkel (β) zwischen der zweiten Anlagefläche (20) des Gebläserads (7) und der Drehachse (4) kleiner ist als der Winkel (γ) zwischen der Anlagefläche (18) der Welle (3) und der Drehachse (4).

8. Arbeitsgerät nach einem der Ansprüche 1 bis 7,
**dadurch gekennzeichnet, dass** die erste Reibkontaktfläche (12) aus zwei im Kontakt stehenden Flächen besteht, wobei die Flächen eine Anlagefläche (9) der Mutter (6) und eine erste Anlagefläche (19) des Gebläserads (7) sind.

9. Arbeitsgerät nach einem der Ansprüche 1 bis 8,
**dadurch gekennzeichnet, dass** das Gewinde (10) als Feingewinde ausgebildet ist.

10. Arbeitsgerät nach einem der Ansprüche 1 bis 9,
**dadurch gekennzeichnet, dass** an der Welle (3) ein zylindrischer Abschnitt (22) ausgebildet ist und das Gebläserad (7) auf dem zylindrischen Abschnitt (22) zur Welle (3) gegen Schrägstellung abgestützt ist.

11. Arbeitsgerät nach einem der Ansprüche 1 bis 10,
**dadurch gekennzeichnet, dass** das Gebläserad (7) eine Nabe (23) und ein auf der Nabe (23) befestigtes Rad (24) umfasst,

12. Arbeitsgerät nach Anspruch 11,
**dadurch gekennzeichnet, dass** die Nabe (23) aus einem Metall, insbesondere einem Sintermetall besteht.

## Claims

1. Handheld work apparatus with a drive motor (2), with a shaft (3) driven by the drive motor (2) in a rotating manner about a rotational axis (4), and with a blower wheel (7), the blower wheel (7) being held by means of a nut (6) on the shaft (3) in a manner locked against rotation by frictional force, the nut (6) and the shaft (3) being in contact via a thread section (11), and a thread moment of friction (M_{A}) acting about the rotational axis (4) being transmittable between the nut (6) and the shaft (3) via the thread section (11), the nut (6) and the blower wheel (7) being in contact via a first friction contact surface (12), and a first moment of friction (M₁) acting about the rotational axis (4) being transmittable between the nut (6) and the blower wheel (7) via the first friction contact surface, and the blower wheel (7) and the shaft (3) being in contact via a second friction contact surface (13),
**characterized in that** the first friction contact surface (12) is designed in such a manner that, at a minimum tightening moment of the nut (6), said minimum tightening moment being between 10% and 100% of the operating torque, the first moment of friction (M₁) transmittable between the nut (6) and the blower wheel (7) via the first friction contact surface (12) is greater than the acting thread moment of friction (M_{A}), and therefore, during the operation of the work apparatus (1) when there is a relative movement between the blower wheel (7) and the shaft (3), the blower wheel (7) moves along the nut (6) therewith via the first moment of friction (M₁) acting at the first friction contact surface (12), and therefore the nut (6) retensions the blower wheel (7) against the shaft (3) via the second friction contact surface (13), and **in that** the second friction contact surface (13) runs conically with respect to the rotational axis (4).

2. Work apparatus according to claim 1,
**characterized in that** a tangential force (F_{T}), which forms the first moment of friction (Mi), at the first friction contact surface (12) acts at a distance (s) from the rotational axis (4) in the peripheral direction of the rotational axis (4), wherein the distance (s) corresponds at least to 1.5 times the inner radius (d) of the nut (6) at the thread section (11).

3. Work apparatus according to claim 1 or 2,
**characterized in that** the second friction contact surface (13) and the rotational axis (4) enclose an angle (α) of at least 15°.

4. Work apparatus according to any one of claims 1 to 3,
**characterized in that** the second friction contact surface (13) and the rotational axis (4) enclose an angle (α) of at most 75°.

5. Work apparatus according to any one of claims 1 to 4,
**characterized in that** the second friction contact surface (13) is designed and arranged in such a manner that, in the second friction contact surface (13), there is no self-locking between the blower wheel (7) and the nut (6).

6. Work apparatus according to any one of claims 1 to 5,
**characterized in that** the second friction contact surface (13) consists of two surfaces which are in contact, wherein the surfaces are a contact surface (18) of the shaft (3) and a second contact surface (20) of the blower wheel (7).

7. Work apparatus according to claim 6,
**characterized in that**, in a top view of a longitudinal plane (8) containing the rotational axis (4), the angle (β) between the second contact surface (20) of the blower wheel (7) and the rotational axis (4) is smaller than the angle (γ) between the contact surface (18) of the shaft (3) and the rotational axis (4).

8. Work apparatus according to any one of claims 1 to 7,
**characterized in that** the first friction contact surface (12) consists of two surfaces which are in contact, wherein the surfaces are a contact surface (9) of the nut (6) and a first contact surface (19) of the blower wheel (7).

9. Work apparatus according to any one of claims 1 to 8,
**characterized in that** the thread (10) is in the form of a fine pitch thread.

10. Work apparatus according to any one of claims 1 to 9,
**characterized in that** a cylindrical section (22) is formed on the shaft (3), and the blower wheel (7) is supported against inclination with respect to the shaft (3) on the cylindrical section (22).

11. Work apparatus according to any one of claims 1 to 10,
**characterized in that** the blower wheel (7) comprises a hub (23) and a wheel (24) which is fastened on the hub (23).

12. Work apparatus according to claim 11,
**characterized in that** the hub (23) is composed of a metal, in particular a sintered metal.

## Revendications

1. Appareil de travail tenu à la main comportant un moteur d'entraînement (2), comportant un arbre (3) entraîné en rotation autour d'un axe de rotation (4) par le moteur d'entraînement (2) et comportant une roue de ventilateur (7), la roue de ventilateur (7) étant retenue sur l'arbre (3) au moyen d'un écrou (6) par une force de friction de manière bloquée en rotation, l'écrou (6) et l'arbre (3) étant en contact par le biais d'une partie filetée (11), et un couple de friction de filetage (M_{A}) agissant autour de l'axe de rotation (4) pouvant être transmis entre l'écrou (6) et l'arbre (3) par le biais de la partie filetée (11), l'écrou (6) et la roue de ventilateur (7) étant en contact par le biais d'une première surface de contact de friction (12), et un premier couple de friction (M₁) agissant autour de l'axe de rotation (4) pouvant être transmis entre l'écrou (6) et la roue de ventilateur (7) par le biais de la première surface de contact de friction, et la roue de ventilateur (7) et l'arbre (3) étant en contact par le biais d'une deuxième surface de contact de friction (13),
**caractérisé en ce que** la première surface de contact de friction (12) est réalisée de telle sorte qu'en cas de couple de serrage minimal de l'écrou (6), qui est compris entre 10% et 100% du couple de fonctionnement, le premier couple de friction (M₁) pouvant être transmis entre l'écrou (6) et la roue de ventilateur (7) par le biais de la première surface de contact de friction (12) est supérieur au couple de friction de filetage (M_{A}) actif, de sorte que lors du fonctionnement de l'appareil de travail (1), en cas de mouvement relatif entre la roue de ventilateur (7) et l'arbre (3), la roue de ventilateur (7) entraîne l'écrou (6) par le biais du premier couple de friction (M₁) agissant sur la première surface de contact de friction (12), de sorte que l'écrou (6) resserre la roue de ventilateur (7) contre l'arbre (3) par le biais de la deuxième surface de contact de friction (13), **en ce que** la deuxième surface de contact de friction (13) s'étend de manière conique par rapport à l'axe de rotation (4).

2. Appareil de travail selon la revendication 1,
**caractérisé en ce qu'**une force tangentielle (F_{T}) formant le premier couple de friction (M₁) sur la première surface de contact de friction (12) agit à une distance (s) de l'axe de rotation (4) dans la direction périphérique de l'axe de rotation (4), la distance (s) correspondant au moins à 1,5 fois le rayon intérieur (d) de l'écrou (6) au niveau de la partie filetée (11).

3. Appareil de travail selon la revendication 1 ou 2,
**caractérisé en ce que** la deuxième surface de contact de friction (13) et l'axe de rotation (4) forment un angle (α) d'au moins 15°.

4. Appareil de travail selon l'une des revendications 1 à 3,
**caractérisé en ce que** la deuxième surface de contact de friction (13) et l'axe de rotation (4) forment un angle (α) d'au maximum 75°.

5. Appareil de travail selon l'une des revendications 1 à 4,
**caractérisé en ce que** la deuxième surface de contact de friction (13) est réalisée et disposée de telle sorte qu'aucun blocage automatique n'existe entre la roue de ventilateur (7) et l'écrou (6) dans la deuxième surface de contact de friction (13).

6. Appareil de travail selon l'une des revendications 1 à 5,
**caractérisé en ce que** la deuxième surface de contact de friction (13) est constituée de deux surfaces en contact, les surfaces étant une surface d'appui (18) de l'arbre (3) et une deuxième surface d'appui (20) de la roue de ventilateur (7).

7. Appareil de travail selon la revendication 6,
**caractérisé en ce qu'**en vue de dessus d'un plan longitudinal (8) contenant l'axe de rotation (4), l'angle (β) entre la deuxième surface d'appui (20) de la roue de ventilateur (7) et l'axe de rotation (4) est inférieur à l'angle (γ) entre la surface d'appui (18) de l'arbre (3) et l'axe de rotation (4).

8. Appareil de travail selon l'une des revendications 1 à 7,
**caractérisé en ce que** la première surface de contact de friction (12) est constituée de deux surfaces en contact, les surfaces étant une surface d'appui (9) de l'écrou (6) et une première surface d'appui (19) de la roue de ventilateur (7).

9. Appareil de travail selon l'une des revendications 1 à 8,
**caractérisé en ce que** le filetage (10) est réalisé sous forme de filetage à pas fin.

10. Appareil de travail selon l'une des revendications 1 à 9,
**caractérisé en ce qu'**une partie cylindrique (22) est réalisée sur l'arbre (3) et la roue de ventilateur (7) est supportée sur la partie cylindrique (22) de manière à empêcher une position oblique par rapport à l'arbre (3).

11. Appareil de travail selon l'une des revendications 1 à 10,
**caractérisé en ce que** la roue de ventilateur (7) comporte un moyeu (23) et une roue (24) fixée sur le moyeu (23).

12. Appareil de travail selon la revendication 11,
**caractérisé en ce que** le moyeu (23) est constitué d'un métal, en particulier d'un métal fritté.
